# EUROPEAN PATENT SPECIFICATION

(11) **EP 0 452 313 B1**
(45) Date of publication and mention of the grant of the patent: **10.08.1994**
(21) Application number: 89906479.4
(22) Date of filing: 12.05.1989
(51) Int. Cl.: A01F 29/00

(54) **A DEVICE FOR THE TEARING/CUTTING OF ROUND STRAW AND GRASS BALES**
Anordnung zum Zerreissen und Schneiden von runden Stroh- und Grasballen
DISPOSITIF POUR DECHIRER/COUPER DES BOTTES RONDES DE PAILLE ET D'HERBES

(30) Priority: 06.06.1988 NO 882483
(43) Date of publication of application: 23.10.1991
(73) Proprietor: SERIGSTAD A/S, N-4340 Bryne (NO)
(72) Inventor: NILSEN, Nils, Inge, N-4344 Kvernaland (NO); BYRKJA, Erling, N-4340 Bryne (NO); EIKELAND, Jostein, N-4350 Naerb (NO)
(74) Representative: Rackham, Stephen Neil
(86) International application number: NO8900047
(87) International publication number: WO8911786

(56) References cited:
- EP-A- 0 032 776
- WO-A-87/05186
- DE-A- 3 614 234
- DE-C- 3 337 390
- FR-A- 2 320 043
- GB-A- 2 048 211

## Description

The present invention relates particularly, but not exclusively, to a device for the tearing/cutting of straw and grass bales. The device according to the invention may also be used for silo mass and hay. At the same time as the invention relates to entirely new technique for the tearing/cutting of grass bales having a high water content, the invention also relates to novel improved technique for the tearing/cutting of straw bales.

So called round-bale cutters and tearers for hay and straw have since long been known technology. These machines function poorly, and in the most cases they do not function for ensiled grass in round bales. Some machines present problems with ammonia-treated straw alone.

Straw is very fibrous and in dry form hard, stiff and partially brittle. Ammonia-treatment makes the straw tough, and that it withstands great forces before being torn off.

With regard to ensiled grass rich in leaves and having a high water content, this is an entirely different and far more difficult mass to handle. It may be very dough-like, sticky and adhesive. Through unsuccessful mechanical influence nothing else than a compression inwards in the bale is achieved, and the sticky mass has a tendency to build itself up on transport and working means.

Ensiling of grass in round-bales has in the course of a short time become very popular, but this mechanising line with its pressing machines and packing machines is incomplete without an efficient tearing or cutting machine able to convert the ensiled grass mass into an easily transportable fodder which can be forwarded to each single animal in a form giving a good absorption of fodder. In agriculture, this is a very large problem.

Many farmers use primitive tools such as e.g. axe and grip to loosen up the bales, while others try to let an unloading vehicle do the job, but this gives a poor result and an exceptionally large wearing on the unloading vehicle. The work is also accociated with a large injury to health, because mould in the grass bales contains fungus spores which are very dangerous to inhale.

In e.g. milk production, both straw and grass are used simultaneously. Grass is decisively the most important because of its higher fodder value.

Because of the quite particular consistence of grass bales in contrast with straw bales, it may seem natural to develop an individual device for tearing/cutting of grass bales. For a farmer, however, it would be very unfortunate to have to purchase two machines - one for straw bales and one for grass bales.

A main object of this invention is to provide a device by which both straw and grass bales can be torn/cut efficiently and having satisfactory capacity and consumption of energy.

It is also an object to eliminate larger disadvantages in known straw bale cutters. In straw bale cutters wherein the straw bale is placed in a cylindrical container wherein the straw bale is pulled around on a rigid bottom and over a radially positioned grid section having associated cutting means, one has the disadvantages of high friction against the bottom plate and thereby large energy consumption, the cutting ability decreases largely when the weight of the bale is reduced and causes that single straws easily get twisted around the rotor of the cutting means, resulting in blockage.

Taking a straw bale out of such a machine upon blockage after the bale has disintegrated, and putting the straw bale back into the machine after the latter has been cleaned, is a laborous and time-consuming task.

Straw bale cutters wherein the bale is placed on a rotation table, and wherein a cutting means is lowered from above, have a tendency to stop when the round-bale works its way outwards against the cylindrical side wall, and the friction increases drastically. This occurs especially when the bale is rotated oppositely of the direction in which it is rolled up during pressing. Deciding visually in which direction the bale is rolled up, is very difficult. One faces here the same problems concerning high energy consumption and stoppage as mentioned above.

The objects of the invention are achieved through the features defined in the following claims.

Known technique for tearing/cutting of straw bales appears from the following patent specifications: US 2.650.745, US 4.003.502, EP 0.155.884, EP 0.244.977, GB 2.122.480, and Norwegian patent application No. 861610. All of these techniques are, apart from their weaknesses with regard to straw, poorly and partially quite unsuitable for the tearing/cutting of grass bales, especially for grass bales having a high water content.

There are a number of variants of US 2.650.745 and US 4.003.502. The most marked further development is development of more efficient cutting means. The rotor of the cutting means has been provided with a plurality of blades passing into grooves in a grid laying over the rotor. According to desired cutting length and capacity, the design of the grid and the height of the blades above the grid may be altered. The grid acts as a stationary counter tool. The rotary velocity of the rotor is usually relatively high in order to obtain a good cutting effect upon dry material rich in fibres. Used on a dough-like, wet and leaf-rich mass, this type of devices will function against their purpose, and the machine will stop after a short time because of blockage. At best, the machine will not stop, but it will then have a very low capacity, and the torn/cut mass will appear in a more mashed form than in torn/cut straw form. Such a mass is unsuitable as fodder. Besides, the rotor of the machine has a tendency of winding straws around itself, so that blockage is caused in this way also.

In EP 0.155.884 is shown a traditional tearing device for hay and straw. Most of the known fodder vehicles are based on variants of the principle upon which this patent is based. Used on wet grass, the principle will cause large problems. The original grass bale often sags and looses entirely its round-bale shape after plastic and rope/network has been removed. The tearing devices will hardly be able to throw off torn mass and keep clean. Is the rotary velocity increased to avoid this, one will only obtain an unfortunate working of the grass mass, the power consumption must be increased, while the capacity decreases, and the wearing increases. One has the same problems in connection with similar devices used on unloading vehicles and muck spreaders.

The devices according to EP-0,244,977 and GB-2,122,480 are cutting devices in combination with throwing fans. These devices are not self-cleaning and have no mechanism for conveying away insufficiently cut mass. They will require a large amount of energy and will easily become blocked through wet sticky grass mass.

A device described in Norwegian patent application No. 861610 relates to a milling device for straw. The device is dependent of high peripheral speed on the cutting blades as these have no form of counter tool. Used on wet grass such a device will most probably produce mash only.

Technique for tearing/cutting of grass bales having a high water content is unknown. Technique capable of handling the large span in consistence from dry straw to grass having a high water content is unknown too.

According to this invention, an apparatus for tearing and/or cutting of bales of straw, grass, silo mass and similar types of fodder, comprising a conveyor adapted to lead a bale in rotation over a rotor disposed after the conveyor and having a plurality of knives for working in the bale, characterised in that there are provided self cleaning, rotating counter tools adapted to co-operate with an run closely to the surface of the rotor, said counter tools defining a discharge slot with the rotor for discharging torn and cut fodder, the rotor and counter tools being rotatable in the same sense as one another and thereby also acting as an auxiliary means for rotating the bale in the same sense as it is rotated by the conveyor, outer edges of the counter tools being adapted to remove undesired mass from the discharge slot and to return it to the bale.

An embodiment of the invention will in the following be described with reference to the accompanying diagrammatic drawings, wherein:

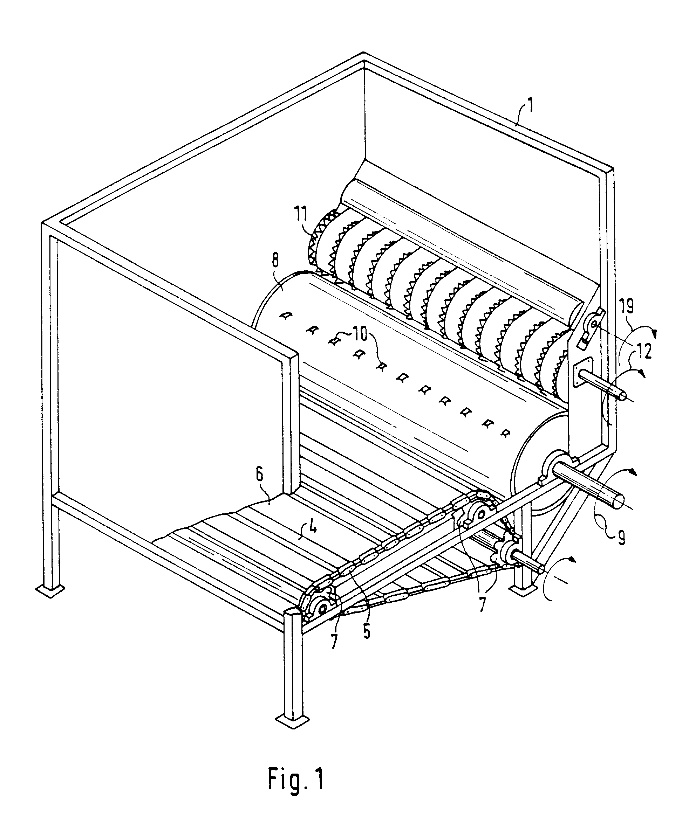

Figure 1 in perspective view shows a complete machine for the tearing/cutting of both straw bales and wet grass bales.
Figure 2 shows the machine cut through in elevation view.
Figure 3 shows a section A-A in Figure 2.
Figure 4 shows an alternative embodiment of self-cleaning counter tools simultaneously acting as auxiliary device for the rotation of a straw bale or a grass bale, respectively.
Figure 5 shows a section B-B in Figure 4.

In the drawings, reference numeral 1 indicates the main frame for receiving round-bales 2. The frame construction 1 is given a design and dimensions which are in accordance with the actual round-bale sizes.

The round-bales 2 are rotated in the direction indicated by the arrow 3, i.e. around the same axis as when they were pressed. Which way the bale is rolled up during pressing, has no significance for the mode of operation of the tearing/cutting device.

The rotation of the round-bale 2 is provided by a conveying belt 4 which in the embodiment shown consists of two chains 5 having a plurality of carriers mounted therebetween and which slide over a plate 6. The chains 5 run over drive wheels 7 coupled to a drive device (not shown). The round-bale 2 is carried over a rotor 8 which also contributes to the rotation of the round-bale 2 in that the rotor 8 rotates in the opposite direction 9 of the round-bale 2, and in that the rotor 8 has a substantially higher rotation speed than the round-bale 2.

The conveying belt 4 may alternatively also consist of a band rotating over end rollers.

The rotor 8 is fitted with a plurality of blades 10 cutting and tearing into the round-bale 2. The rotation of the round-bale 2 ensures that it is uniformly reduced around the circumference as mass is being removed. Because of natural movement in the bale during rotation, the blades will never hit the same groove. This is a substantial pre-condition for tearing/cutting wet grass. Through this rotation principle one achieves that the bale gradually disintegrates in the outer layer.

In order to obtain the necessary tearing and cutting, the blades 10 work against counter tools 11 having a direction of rotation as shown by the arrow 12. The revolving counter tools 11 have a corrugated outer edge in order to contribute to tearing/cutting, but also for bringing undesired mass away from a discharge slot 13 between rotor 8 and a plurality of bands 14 mounted between and closely adjacent the rotating counter tools 11. The revolving counter tools 11 run closely to the surface of the rotor 8.

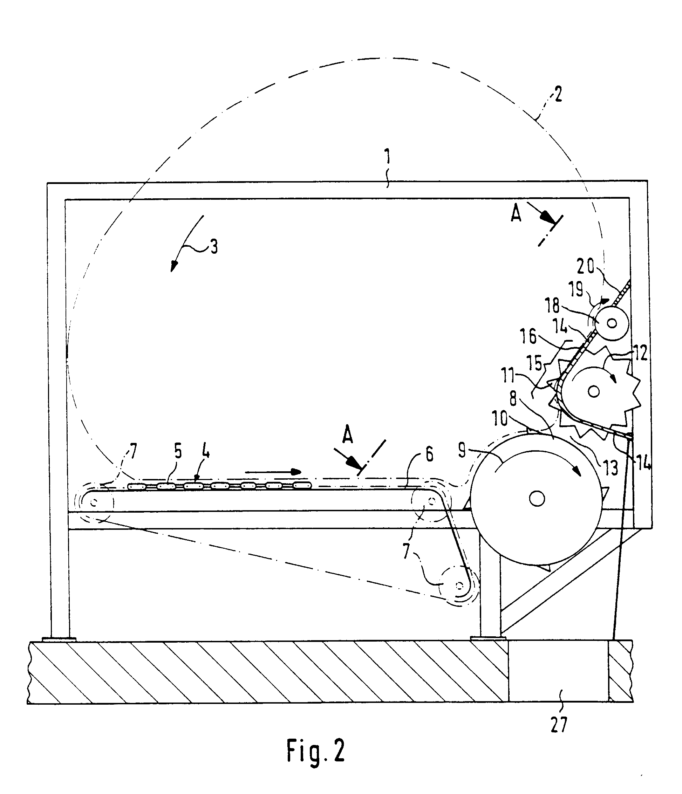

The revolving corrugated counter tools 11 have also another function. In the portion 15 shown in Figure 2, they act as an efficient auxiliary device for the rotation of the round-bale 2. When the rotating counter tools 11 disappear in between the bands 14 at 16 as shown in Figure 2, they scrape themselves clean. This is also a substantial pre-condition for tearing/cutting wet grass.

Further, to avoid wedging through mass accompanying the peaks of the counter tools 11, the slots 17 between the bands 14 continue further upwards and terminate at a plain roller 18 rotating in the direction of the arrow 19. Mass being pressed upwards in the slots 17, slides onto the roller 18 and rotates further together with the round-bale 2. Against the roller 18 stands a plate 20 adapted to act as scraper, at the same time as the round-bale 2 slides against the plate 20.

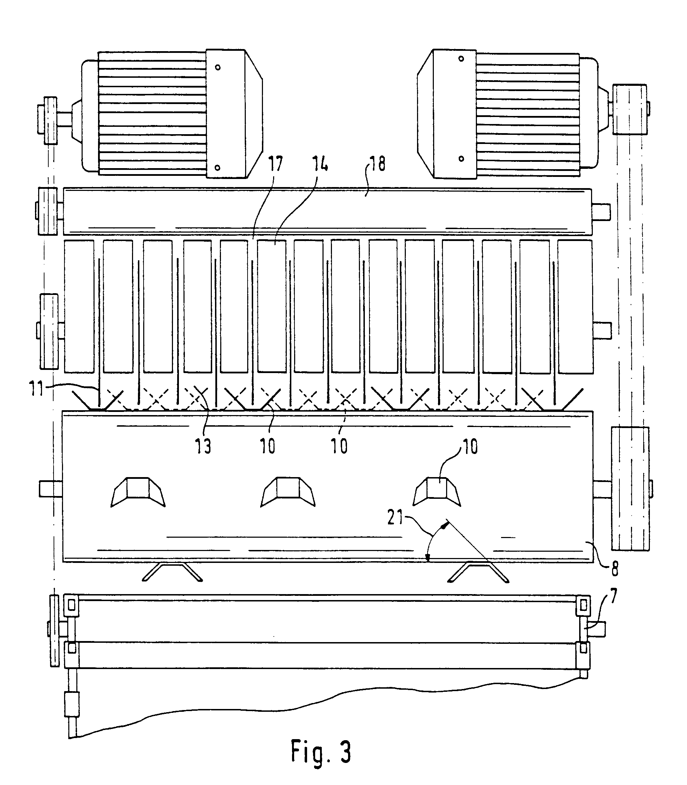

The blades 10 on the rotor 8 have an inclined angle 21 against the surface of the rotor 8 in the longitudinal direction of the latter, as shown in Figure 3, to improve the pulling-out of mass from the round-bale 2, at the same time as the paths of the blades overlap, so that the straw/ grass is being vigorously worked by the blades 10 and the rotating counter tools 11.

The peripheral speed of the blades 10 is adapted to the speed of the conveying belt 4 and is the peripheral speed of the round-bale 2 during rotation.

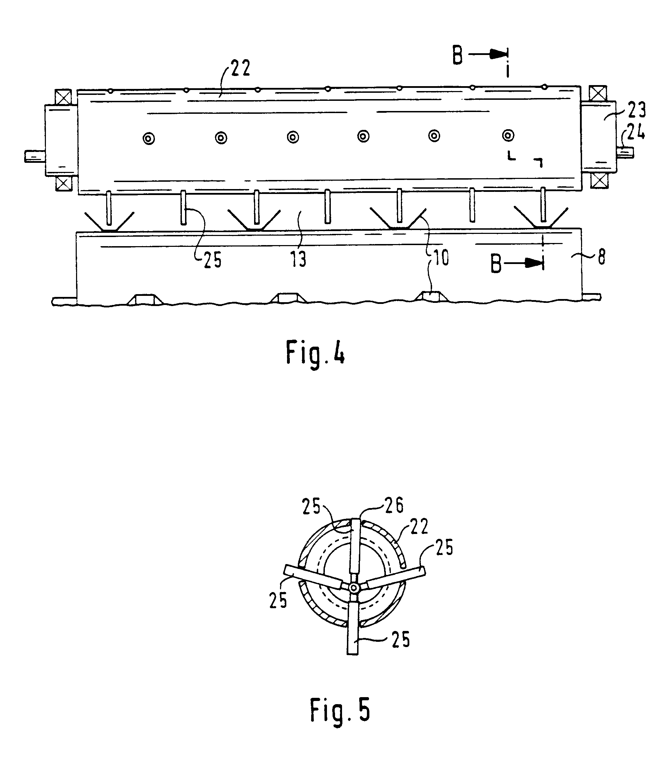

The Figures 4 and 5 show an alternative device of self-cleaning counter tools simultaneously functioning as auxiliary device for the rotation of a straw bale or a grass bale, respectively. The device consists of a rotating pipe 22 revolving about a shaft 23. Eccentrically located in relation to the shaft 23, is a shaft 24 having a plurality of loosely supported counter tools 25 adapted to the blades 10 on the rotor. The rotating pipe 22 is mounted such that the counter tools 25 extend maximum out into the discharge slot 13 between the pipe 22 and the rotor 8. Where the counter tools 25 are entirely retracted into the pipe 22 at 26, the plate is placed as scraper.

The tearing/cutting device may be located stationarily directly above a fodder hatch 27, as shown in Figure 2, and be driven by e.g. electrical power. The device may also be mounted on a tractor and driven by the same, and it may, thus, be positioned both stationarily and mobiliary.

## Claims

1. An apparatus for tearing and/or cutting of bales of straw, grass, silo mass and similar types of fodder, comprising a conveyor (4) adapted to lead a bale (2) in rotation over a rotor (8) disposed after the conveyor (4) and having a plurality of knives (10) for working in the bale (2), characterised in that there are provided self cleaning, rotating counter tools (11, 22, 25) adapted to co-operate with an run closely to the surface of the rotor (8), said counter tools (11, 22, 25) defining a discharge slot (13) with the rotor (8) for discharging torn and cut fodder, the rotor (8) and counter tools (11, 22, 25) being rotatable in the same sense as one another and thereby also acting as an auxiliary means for rotating the bale (2) in the same sense as it is rotated by the conveyor (4), outer edges of the counter tools (11, 22, 25) being adapted to remove undesired mass from the discharge slot (13) and to return it to the bale (2).

2. An apparatus according to claim 1, characterised by a plurality of bands (14) mounted between and adjacent to the rotating counter tools (11) so that the counter tools (11) are self-cleaning against said bands (14).

3. An apparatus according to claim 2, characterised in that slots (17) between said bands (14) upwardly terminate against a roller (18), so that mass being pressed upwards in the slots (17) slides onto the roller (18) and rotates further together with the bale (2).

4. An apparatus according to claim 3, characterised in that against the roller (18) there is placed a plate (20) adapted to act as a scraper, and so arranged that the bale (2) during its rotation can slide against said plate (20).

5. An apparatus according to any one of claims 1 to 4, characterised in that said rotor (8) is cylindrical and said knives (10) thereof project from the cylindrical surface of the rotor by a distance is preferably substantially smaller than the radius of the cylindrical rotor.

6. An apparatus according to any one of claims 1 to 5, characterised in that said knives (10) on the rotor (8) form an inclined angle (21) to the surface of the rotor (8) as seen in the longitudinal direction thereof.

7. An apparatus according to one or more of the preceding claims, characterised in that said knives (10) are positioned in a pattern on the rotor (8) so that the paths of the knives overlap.

8. An apparatus according to any one of claims 1 to 7, characterised in that said counter tools have a circumference formed of a plate shaped member (11) having an indented or sawtooth-like outer edge.

9. An apparatus according to any one of claims 1 to 8, characterised in that the conveyor (4), said rotor (8) and said counter tools (11, 22, 25) have the same direction of rotation.

10. An apparatus according to claim 1, characterised in that a number of counter tools (25), adapted to the knives (10) on the rotor (8), are loosely supported on a shaft (24) eccentrically supported in relation to a rotating pipe (22) having apertures for the counter tools (25) and so that the counter tools (25) extend to the maximum out from the pipe (22) when the counter tools (25) are positioned in the slot (13) between the pipe (22) and the rotor (8).

11. An apparatus according to any one or more of the preceding claims, characterised in that the plate (20) is positioned against the pipe (22) at the place where the counter tools (25) are entirely retracted into the pipe (22).

## Patentansprüche

1. Vorrichtung zum Zerreißen und/oder Zerschneiden von Ballen von Stroh, Gras, Silomasse und ähnlichen Arten von Futter, die einen Förderer (4) aufweist, der einen Ballen (2) in Drehung über einen Rotor (8) führen kann, der hinter dem Förderer (4) angeordnet ist und eine Vielzahl von Messern (10) für Bearbeitung im Ballen (2) aufweist, dadurch gekennzeichnet, daß selbstreinigende sich drehende Gegenwerkzeuge (11, 22, 25) vorgesehen sind, die zum Zusammenwirken mit der Oberfläche des Rotors (8) ausgebildet und nahe an derselben laufen, wobei die Gegenwerkzeuge (11, 22, 25) einen Ablaßschlitz (13) mit dem Rotor (8) zum Ablassen von zerrissenem und zerschnittenem Futter definieren, wobei der Rotor (8) und die Gegenwerkzeuge (11, 22, 25) im selben Sinne miteinander rotierbar sind und dabei auch als Hilfsmittel zum Drehen des Ballens (2) im selben Sinn wirken, wie dieser durch den Förderer (4) gedreht wird, wobei äußere Ränder der Gegenwerkzeuge (11, 22, 25) so ausgebildet sind, daß sie unerwünschtes Material vom Ablaßschlitz (13) entfernen und dasselbe zum Ballen (2) zurückführen.

2. Vorrichtung nach Anspruch 1, gekennzeichnet durch eine Vielzahl von Bändern (14), die zwischen den und benachbart den sich drehenden Gegenwerkzeugen (11) montiert sind, so daß die Gegenwerkzeuge (11) gegen die Bänder (14) selbstreinigend sind.

3. Vorrichtung nach Anspruch 2, dadurch gekennzeichnet, daß Schlitze (17) zwischen den Bändern (14) nach oben hin gegen eine Rolle (18) enden, so daß in den Schlitzen (17) nach oben gedrücktes Material auf die Rolle (18) gleitet und weiter zusammen mit dem Ballen (2) rotiert.

4. Vorrichtung nach Anspruch 3, dadurch gekennzeichnet, daß gegen die Rolle (18) eine Platte (20) anliegt, die als ein Kratzer wirken kann und so angeordnet ist, daß der Ballen (2) während seiner Drehung gegen die Platte (20) gleiten kann.

5. Vorrichtung nach einem der Ansprüche 1 bis 4, dadurch gekennzeichnet, daß der Rotor (8) zylindrisch ist und die Messer (10) desselben von der zylindrischen Oberfläche des Rotors um einen Abstand vorstehen, der im wesentlichen kleiner ist als der Radius des zylindrischen Rotors.

6. Vorrichtung nach einem der Ansprüche 1 bis 5, dadurch gekennzeichnet, daß die Messer (10) am Rotor (8) einen geneigten Winkel (21) mit der Oberfläche des Rotors (8), gesehen in Längsrichtung desselben, bilden.

7. Vorrichtung nach einem oder mehreren der vorangehenden Ansprüche, dadurch gekennzeichnet, daß die Messer (10) in einem Muster auf dem Rotor (8) angeordnet sind, so daß die Wege der Messer sich überlappen.

8. Vorrichtung nach einem der Ansprüche 1 bis 7, dadurch gekennzeichnet, daß die Gegenwerkzeuge einen Umfang aufweisen, der aus einem plattenförmigen Glied (11) gebildet ist, das einen gezackten oder sägezahnförmigen äußeren Rand aufweist.

9. Vorrichtung nach einem der Ansprüche 1 bis 8, dadurch gekennzeichnet, daß der Förderer (4), der Rotor (8) und die Gegenwerkzeuge (11, 22, 25) dieselbe Drehrichtung haben.

10. Vorrichtung nach Anspruch 1, dadurch gekennzeichnet, daß eine Anzahl von Gegenwerkzeugen (25), die an die Messer (10) des Rotors (8) angepaßt sind, lose auf einer Welle (24) abgestützt sind, die exzentrisch in bezug auf ein sich drehendes Rohr (22) gelagert ist, das Öffnungen für die Gegenwerkzeuge (25) hat und zwar so, daß die Gegenwerkzeuge (25) sich maximal von dem Rohr (22) heraus erstrecken, wenn die Gegenwerkzeuge (25) im Schlitz (13) zwischen dem Rohr (22) und dem Rotor (8) angeordnet sind.

11. Vorrichtung nach einem oder mehreren der vorangehenden Ansprüche, dadurch gekennzeichnet, daß die Platte (20) gegen das Rohr (22) an der Stelle anliegt, an der die Gegenwerkzeuge (25) völlig in das Rohr (22) zurückgezogen sind.

## Revendications

1. Appareil de déchiquetage et de hachage de balles de paille, de fourrage vert, de masse ensilée et de types semblables de fourrage, comprenant un transporteur (4) destiné à mettre une balle (2) en rotation au-dessus d'un rotor (8) placé après le transporteur (4) et ayant plusieurs couteaux (10) destinés à agir sur la balle (2), caractérisé en ce que des outils auxiliaires rotatifs (11, 22, 25) de nettoyage automatique sont destinés à coopérer avec une course très proche de la surface du rotor (8), les outils auxiliaires (11, 22, 25) délimitant une fente d'évacuation (13) avec le rotor (8) afin que le fourrage déchiqueté et haché soit évacué, le rotor (8) et les outils auxiliaires (11, 22, 25) pouvant tourner dans le même sens l'un et l'autre et pouvant aussi agir comme dispositif auxiliaire pour l'entraînement en rotation de la balle (2) dans le sens dans lequel elle est entraînée en rotation par le transporteur (4), les bords externes des outils auxiliaires (11, 22, 25) étant destinés à retirer la masse indésirable de la fente d'évacuation (13) et à la renvoyer vers la balle (2).

2. Appareil selon la revendication 1, caractérisé par plusieurs bandes (14) montées entre les outils auxiliaires rotatifs (11) et près de ceux-ci de manière que les outils auxiliaires (11) présentent un nettoyage automatique contre les bandes (14).

3. Appareil selon la revendication 2, caractérisé en ce que les fentes (17) comprises entre les bandes (14) et tournées vers le haut se terminent contre un rouleau (18), si bien qu'une masse repoussée vers le haut dans les fentes (17) glisse sur le rouleau (18) et continue à tourner avec la balle (2).

4. Appareil selon la revendication 3, caractérisé en ce qu'une plaque (20) est placée contre le rouleau (18) et est destinée à jouer le rôle d'un racloir, sa disposition étant telle que la balle (2), pendant sa rotation, peut glisser contre la plaque (20).

5. Appareil selon l'une quelconque des revendications 1 à 4, caractérisé en ce que le rotor (8) est cylindrique, et les couteaux (10) dépassent de la surface cylindrique du rotor d'une distance qui est de préférence nettement inférieure au rayon du rotor cylindrique.

6. Appareil selon l'une quelconque des revendications 1 à 5, caractérisé en ce que les couteaux (10) placés sur le rotor (8) font un angle d'inclinaison (21) avec la surface du rotor (8), en direction longitudinale.

7. Appareil selon l'une quelconque des revendications précédentes, caractérisé en ce que les couteaux (10) sont disposés suivant un dessin sur le rotor (8) afin que les trajets de couteaux se recouvrent.

8. Appareil selon l'une quelconque des revendications 1 à 7, caractérisé en ce que les outils auxiliaires ont une circonférence formée d'un organe (11) analogue à une plaque ayant un bord externe à cavités ou en dents de scie.

9. Appareil selon l'une quelconque des revendications 1 à 8, caractérisé en ce que le transporteur (4), le rotor (8) et les outils auxiliaires (11, 22, 25) ont le même sens de rotation.

10. Appareil selon la revendication 1, caractérisé en ce qu'un certain nombre d'outils auxiliaires (25), adaptés aux couteaux (10) placés sur le rotor (8), sont supportés avec du jeu sur un arbre (24) qui est supporté excentriquement par rapport à un tube rotatif (22) ayant des ouvertures pour le passage des outils auxiliaires (25), et de manière que les outils auxiliaires (25) dépassent au maximum à l'extérieur du tube (22) lorsque les outils auxiliaires (25) sont placés dans la fente (13) comprise entre le tube (22) et le rotor (8).

11. Appareil selon une ou plusieurs des revendications précédentes, caractérisé en ce que la plaque (20) est placée contre le tube (22) à un emplacement auquel les outils auxiliaires (25) ont entièrement reculé à l'intérieur du tube (22).
